# EUROPEAN PATENT SPECIFICATION

(11) **EP 2 679 346 B1**
(45) Date of publication and mention of the grant of the patent: **18.08.2021**
(21) Application number: 12749060.5
(22) Date of filing: 07.02.2012
(51) Int. Cl.: B25F 5/00, F16D 48/06, F16H 61/02, B25B 21/00

(54) **ELECTRIC TOOL**
ELEKTROWERKZEUG
OUTIL ÉLECTRIQUE

(30) Priority: 22.02.2011 JP 2011035369
(43) Date of publication of application: 01.01.2014
(73) Proprietor: Panasonic Intellectual Property Management Co., Ltd., Osaka-shi, Osaka 540-6207 (JP)
(72) Inventor: INAGAKI, Kenichiro, Osaka 540-6207 (JP); KAIZO, Hiroyuki, Osaka 540-6207 (JP); ATSUMI, Masatoshi, Osaka 540-6207 (JP); ARIMURA, Tadashi, Osaka 540-6207 (JP); YAMADA, Yutaka, Osaka 540-6207 (JP)
(74) Representative: Appelt, Christian W.
(86) International application number: PCT/JP2012/052671
(87) International publication number: WO 2012/114860

(56) References cited:
- JP-A- 8 270 780
- JP-A- 2003 206 960
- JP-A- 2008 180 390
- JP-A- 2009 056 590
- JP-B2- 3 516 084
- US-A1- 2009 071 673
- None

## Description

### TECHNICAL FIELD

The present invention relates to an electric tool that is capable of switching a reduction ratio.

### BACKGROUND ART

In the electric tool including a reduction mechanical unit, as a mechanism for switching the reduction ratio of the reduction mechanical unit, there has been a mechanism that slides a switching member such as a ring gear constituting a planet reduction mechanism in the shaft direction, thereby switching an engagement state.

The electric tools described in Patent literatures 1 and 2 automatically perform a slide operation of a switching member by using a solenoid, and the switching member includes a ring gear. To suppress the shock generated in the case where the switching member engages with another gear member, when the solenoid is started, these conventional electric tools stop or reduce rotation of a motor.

In the above conventional electric tools, when the current or the like of the motor changes, which serves as the driving source, the control unit detects this and performs to start the solenoid and to stop rotating the motor in accordance with a preset timing.

Therefore, first the above conventional electric tools certainly perform to stop rotation of the motor used for reducing shock, and then start the solenoid. Therefore, the above conventional electric tools suppress the shock generated upon the engagement as much as possible. However, according to this, it is difficult to complete the modification of the reduction ratio in a short time. That is, the above conventional electric tools are not enough to satisfy both suppressing the shock generated by the engagement at the modification of the reduction ratio and completing smoothly the modification of the reduction ratio in a short time.

### PRIOR ART DOCUMENTS

### PATENT LITERATURE

Patent literature 1: Japanese Unexamined Patent Application Publication No. 2009-56590
Patent literature 2: Japanese Unexamined Patent Application Publication No. 2009-78349

US 2009/0071673 A1 describes a power tool comprising a housing, a motor, an output shaft, a gear transmission mechanism and a control system. The gear transmission mechanism is connected between the motor and the output shaft to transmit the rotary power of the motor to the output shaft. The power tool comprises a signal generator and a control system electrically coupled to the signal generator and operatively engaged with the gear transmission mechanism such that when the signal generator is manually activated, an electric signal is generated and transmitted to the control system to cause the gear transmission mechanism to vary the gear reduction ratio.

### SUMMARY OF THE INVENTION

### PROBLEMS TO BE RESOLVED BY THE INVENTION

However, there has been a certain amount of variation on the mechanism between the timing, at which the switching member actually engages with a predetermined gear member via many mechanisms, and the timing, at which the motor is reduced according to a setting, and then actually stops rotation of the motor according to a purpose.

Therefore, the relative rotation position between the switching member and the gear member is not set according to the setting. When it is difficult to engage the switching member with the gear member, it is difficult to move slidably before the switching member reaches the predetermined target position. It becomes an incomplete gear shift state in which the reduction ratio cannot be switched. This is a state in which the switching of the reduction ratio is failed. This state causes the impediment for the work because it is difficult to switch the gear shift. Further, this state causes the breakdown because the over load is added to the member or the like, which connects the solenoid and the switching member.

However, in the above conventional electric tools, the control unit cannot control to resolve the incomplete gear shift state when the automatic gear shift is being driven.

The present invention provides an electric tool that is capable of quickly resolving an interruption of sliding (incomplete gear shift state) in accordance with a state in which it is difficult to engage at the modification of a reduction ratio.

### MEANS OF SOLVING THE PROBLEMS

To resolve the problem, an electric tool according to the present invention is defined by the attached claims.

The electric tool according to the present invention is an electric tool, which includes: a motor serving as a drive source; a reduction mechanical unit reducing and transferring a rotational power of the motor; and a reduction ratio switching means switching a reduction ratio of the reduction mechanical unit.

The reduction mechanical unit is formed so as to switch the reduction ratio by using a switching member moving slidably in an axial direction, and a gear member switching an engagement state and a non-engagement state with the switching member in accordance with a slide position in the axial direction of the switching member.

The reduction ratio switching means includes: a gear shift actuator sliding the switching member in the axial direction; a slide position detecting unit detecting the slide position of the switching member; and a control unit starting the gear shift actuator, and modifying the rotational power of the motor temporarily in accordance with a detection result of the slide position detecting unit.

When driving the gear shift actuator and modifying the rotational power temporarily, the control unit modifies a relative rotation speed between the switching member and the gear member when a gear shift is in an incomplete state in which that the switching member has not moved slidably to a predetermined target position yet is determined by the detection result of the slide position detecting unit.

Further, the control unit modifies drive control of the gear shift actuator in accordance with the detection result of the slide position detecting unit.
In this time, the control unit preferably reverses once a slide direction of the switching member by the gear shift actuator when the gear shift is in the incomplete state.

In addition, the control unit preferably modifies a slide driving force of the switching member by the gear shift actuator when the gear shift is in the incomplete state.

In addition, the control unit preferably modifies the relative rotation speed while maintaining a slide driving of the switching member by the gear shift actuator when the gear shift is in the incomplete state.

In addition, the control unit preferable modifies the relative rotation speed while stopping a slide driving of the switching member by the gear shift actuator when the gear shift is in the incomplete state.

In this time, the control unit increases the rotational power and modifies the relative rotation speed when the gear shift is in the incomplete state and it is determined that the rotational power of the motor decreases or stops.

Further, the control unit preferably increases a rotational acceleration increasing the rotational power so that the rotational acceleration in case where the switching member has moved slidably is larger than the rotational acceleration in case where the switching member has not moved slidably.

### EFFECTS OF THE INVENTION

The present invention leads the effect that it is possible to quickly resolve an interruption of sliding in accordance with a state in which it is difficult to engage at the modification of a reduction ratio.

### BRIEF DESCRIPTION OF THE DRAWINGS

Fig. 1 is a side cross sectional view of an electric tool according to a first example.
Fig. 2 is a side view of an inner of the electric tool.
Fig. 3 is a cross sectional view of a back of the electric tool.
Fig. 4 is an exploded perspective view of a reduction mechanical unit of the electric tool.
Fig. 5 is an explanatory drawing of a main section of the electric tool.
Fig. 6 (a) is a side cross sectional view showing a state of a first gear of the reduction mechanical unit, and Fig.6 (b) is a side view showing the state of the first gear of the reduction mechanical unit.
Fig. 7 is a side cross sectional view showing an incomplete switching state between first and second gears of the reduction mechanical unit.
Fig. 8 (a) is a side cross sectional view showing a state of the second gear of the reduction mechanical unit, and Fig.8 (b) is a side view showing the state of the second gear of the reduction mechanical unit.
Fig. 9 is a side cross sectional view showing an incomplete switching state between second and third gears of the reduction mechanical unit.
Fig. 10 (a) is a side cross sectional view showing a state of the third gear of the reduction mechanical unit, and Fig. 10 (b) is side view showing the state of the third gear of the reduction mechanical unit.
Fig. 11 (a) is an explanatory drawing showing a state of a second gear of a main section of an electric tool according to a third example, Fig. 11 (b) is an explanatory drawing showing an incomplete switching state between second and third gears of the main section of the electric tool according to the third example, and Fig. 11 (c) is an explanatory drawing showing a state of the third gear of the main section of the electric tool according to the third example of the present invention.
Fig. 12 is an explanatory drawing of a main section of an electric tool according to an embodiment of the present invention.
Fig. 13 (a) is an explanatory drawing showing a state of a second gear of a main section of an electric tool according to a fifth example, Fig. 13 (b) is an explanatory drawing showing an incomplete switching state between second and third gears of the main section of the electric tool according to the fifth example, and Fig. 13 (c) is an explanatory drawing showing a state of the third gear of the main section of the electric tool according to the fifth example.

### DESCRIPTION OF THE EMBODIMENTS

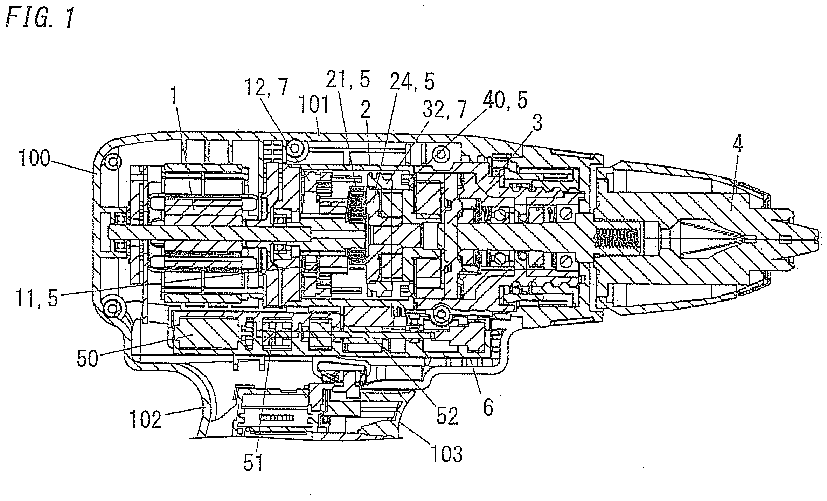

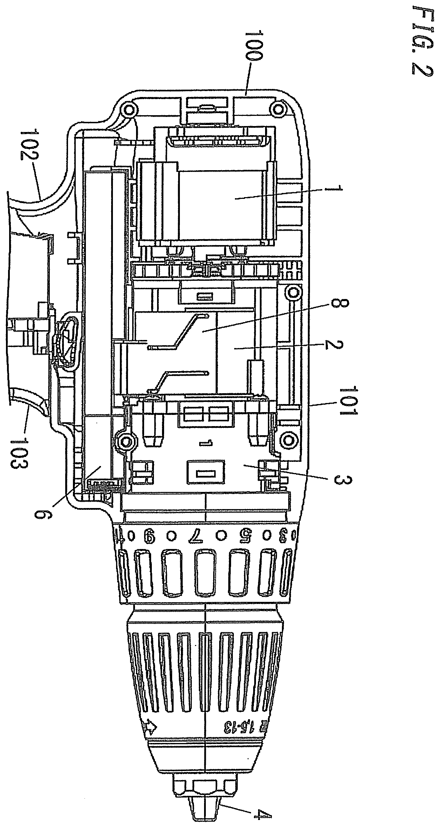

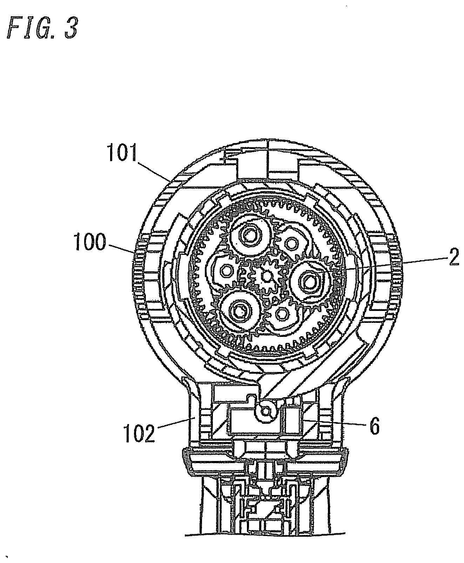

Figs. 1 to 3 show an electric tool according to a first example. The electric tool according to the present example includes a motor (main motor) 1 serving as a drive source, a reduction mechanical unit 2 decreasing and transferring a rotational power of this motor 1, and a drive transmission unit 3 transferring the rotational power to a output shaft 4. The rotational power is transferred through the reduction mechanical unit 2. The motor 1, the reduction mechanical unit 2, and the drive transmission unit 3 are accommodated in a body housing 101. The body housing 101 provides with a gripper housing 102 that extends in the body housing 101, and the gripper housing 102 provides with a trigger switch 103 that is pulled in the gripper housing 102. A main body housing 100 of the electric tool is configured by the body housing 101 and the gripper housing 102.

The body housing 101 accommodates a gear shift actuator 6 so that an axial direction is parallel to the motor 1 and the reduction mechanical unit 2. The gear shift actuator 6 is a rotational type actuator. The gear shift actuator 6 slidably moves a switching member 7 of the reduction mechanical unit 2 through a gear shift cam plate 8, thereby switching the reduction ratio. The detail of this point is described as below.

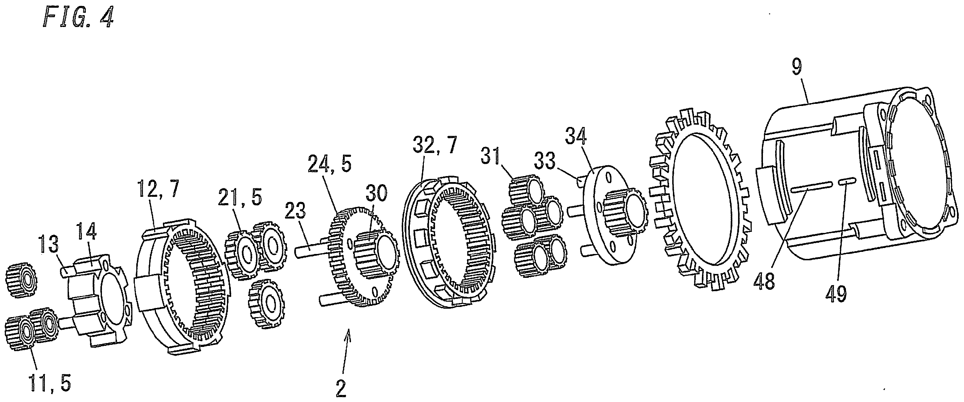

Figs 4 to 10 show a structure of the reduction mechanical unit 2 or the like in more detail. The reduction mechanical unit 2 according to the present embodiment accommodates three planet reduction mechanisms in a gear case 9, and switches a reduction ratio of whole the reduction mechanical unit 2 by switching a speed reduction state and a non-speed reduction state of each planet reduction mechanism. The description as below defines a first, second and third planet reduction mechanisms in order from a side close to the motor 1.

The first planet reduction mechanism includes a sun gear 10 (not shown in Fig 4) driven rotatably in the center of an axis by the rotational power from the motor 1, a plurality of planet gears 11 engaging with the sun gear 10, and a ring gear 12 engaging with the planet gears 11. The planet gears 11 are located around the sun gear 10, and the ring gear 12 is located around the plurality of planet gears 11. The first planet reduction mechanism further includes a carrier 14 connected to the plurality of planet gears 11 rotatably, and a carrier pin 13 connecting the planet gears 11 and the carrier 14.

The second planet reduction mechanism includes a second sun gear 20 (not shown in Fig. 4) connected to the first sun gear 10, a plurality of planet gears 21 engaging with the sun gear 20, and a first ring gear 12 being capable of engaging with the plurality of planet gears 21. The planet gears 21 are located around the sun gear 20. The second planet reduction mechanism further includes a carrier 24 connected to the plurality of planet gears 21 rotatably, and a carrier pin 23 connecting the planet gears 21 and the carrier 24. An apical end of the carrier pin 23 is connected to the first carrier 14.

The ring gear 12 has a structure that is capable of selecting alternatively based on the slide position either a member for forming the first planet reduction mechanism or a member for forming the second planet reduction mechanism. That is, the ring gear 12 engages with the first planet gears 11 when being located at a slide position of the side of the motor 1, and engages with the second planet gears 21 when being located at a slide position of the side of the output shaft 4.

In the below, the side of the motor 1 is merely called "an input side" and the side of the output shaft 4 is merely called "an output side".

The gear case 9 includes a guide unit 15 in the inner periphery. The ring gear 12 engages with the guide unit 15 slidably and non-rotatably in the axial direction. The ring gear 12 moves slidably in the axial direction while being guided by the guide unit 15.

The third planet reduction mechanism includes a third sun gear 30 connected to the second carrier 24, a plurality of planet gears 31 engaging with the sun gear 30, and a ring gear 32 engaging with the plurality of planet gears 31. The planet gears 31 are located around the sun gear 30. The third planet reduction mechanism further includes a carrier 34 connected to the plurality of planet gears 31 rotatably, and a carrier pin 33 connecting the planet gears 31 and the carrier 34.

The ring gear 32 is arranged slidably and rotatably in the axial direction for the gear case 9. When being located at the slide position of the input side, the ring gear 32 engages with the outer circumferential edge of the second carrier 24. When being located at the slide position of the output side, the ring gear 32 engages with an engage cog unit 40 integrated with the gear case 9. In addition, when being located at either of the slide positions, the ring gear 32 engages with the planet gears 31.

The three planet reduction mechanisms are connected in the axial direction. That is, the first, second, and third sun gears 10, 20, and 30 are arranged on a straight line in the axial direction, and the two ring gears 12 and 32, which are located around them, are also arranged on a straight line in the axial direction.

Each of the ring gears 12 and 32 moves slidably in the axial direction independently, and switches the reduction ratio in accordance with the slide position, and modifies the rotational power of the output shaft 4 to a first gear, second gear, or third gear. In this way, in the present embodiment, each of the ring gears 12 and 32 is a part of the switching member 7. The first gear is a state in which the smallest reduction ratio is set, the second gear is a state in which the reduction ratio is set larger than that of the first gear, and the third gear is a state in which the reduction ratio is larger than those of the first gear and second gear (that is, state in which the largest reduction ratio is set).

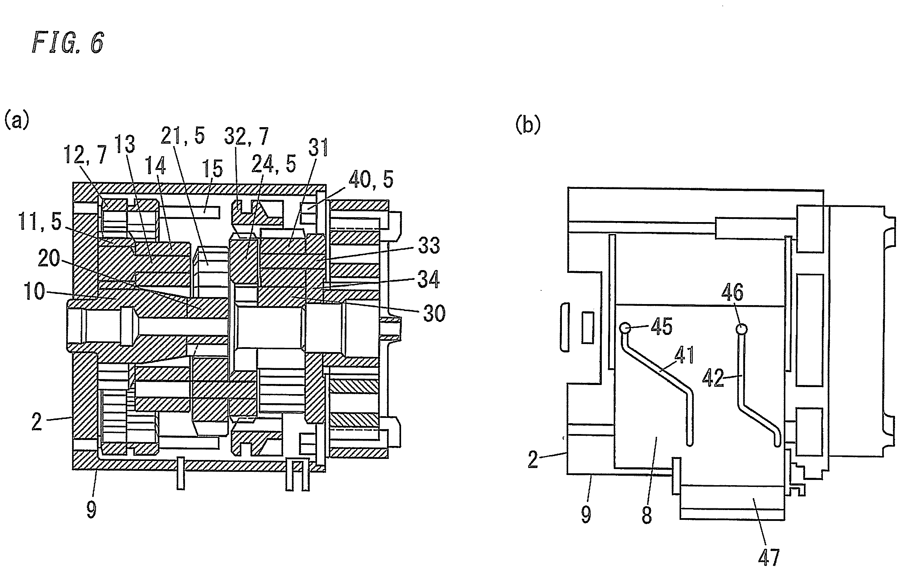

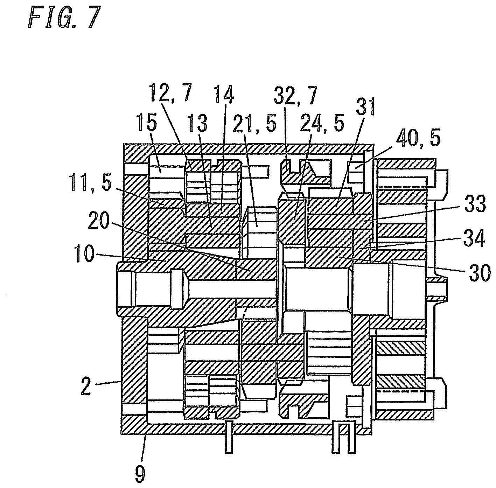

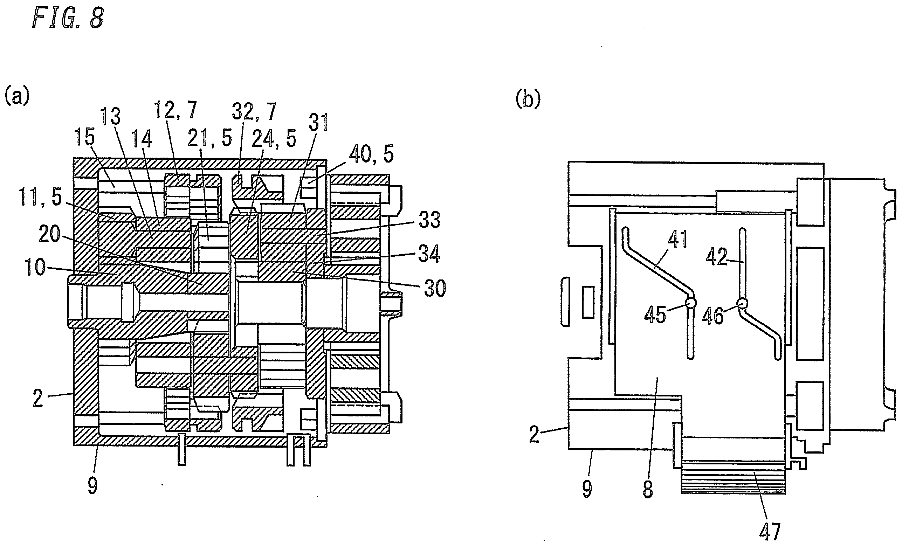

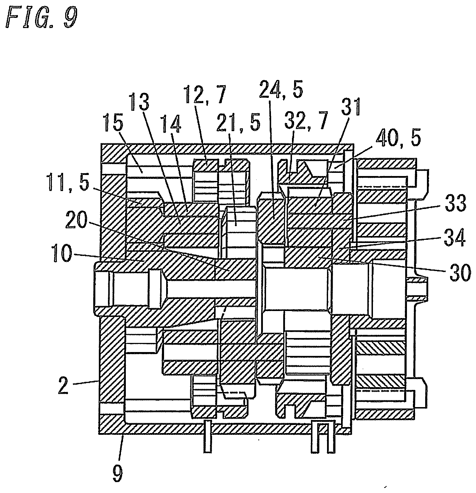

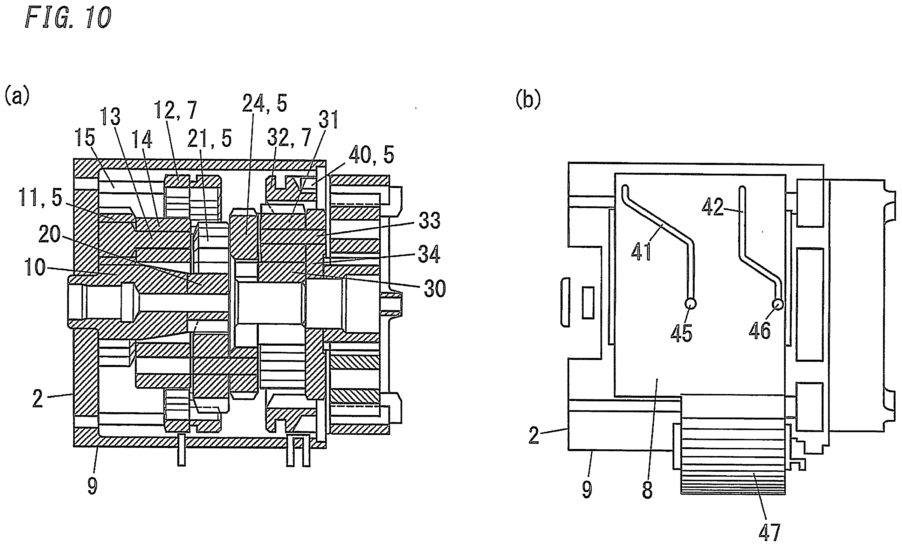

Fig. 6 shows the state of the first gear, Fig. 7 shows the incomplete switching state between first and second gears , Fig. 8 shows the state of the second gear, Fig. 9 shows the incomplete switching state between second and third gears, and Fig. 10 shows the state of the third gear.

In the reduction mechanical unit 2 switched to the first gear shown in Fig. 6, one ring gear 12 that is a part of the switching member 7 is located at the position of the input side, and the other ring gear 32 that is a part of the switching member 7 similarly is located at the position of the input side. Therefore, only the first planet reduction mechanism becomes a speed reduction state.

Specifically, by the rotation of the first sun gear 10, the planet gears 11 engaging with the ring gear 12 rotate and orbit around the sun gear 10. Therefore, the rotational power of the sun gear 10 decreases and is transferred to the carrier 14. The carrier 14 rotates with the second carrier 24. Further, the whole of the third planet reduction mechanism also rotates with the second carrier 24.

In the reduction mechanical unit 2 switched to the second gear shown in Fig. 8, one ring gear 12 that is a part of the switching member 7 is located at the position of the output side, and the other ring gear 32 that is a part of the switching member 7 similarly is located at the position of the input side. Therefore, only the second planet reduction mechanism becomes a speed reduction state.

Specifically, by the rotation of the second sun gear 20 connecting to the first sun gear 10, the planet gears 21 engaging with the ring gear 12 rotate and orbit around the sun gear 20. Therefore, the rotational power of the sun gear 20 decreases and is transferred to the carrier 24. The first and third planet reduction mechanisms rotate with the second carrier 24.

Here, the size and the shape of each member of the first planet reduction mechanism is different from those of the second planet mechanism so that the reduction ratio of the second planet reduction mechanism is larger than that of the first planet reduction mechanism. Therefore, the reduction ratio of the second gear is larger than that of the first gear, and the rotation speed of the output shaft 4 of the second gear becomes smaller than that of the first gear.

In the reduction mechanical unit 2 switched to the third gear shown in Fig. 10, one ring gear 12 that is a part of the switching member 7 is located at the position of the output side, and the other ring gear 32 that is a part of the switching member 7 similarly is located at the position of the output side. Therefore, both of the second reduction mechanism and the third reduction mechanism become speed reduction states.

Specifically, by the rotation of the second sun gear 20 connecting to the first sun gear 10, the second planet gears 21 engaging with the ring gear 12 rotate and orbit around the sun gear 20. Therefore, the rotational power of the sun gear 20 decreases and is transferred to the carrier 24. The first planet reduction mechanism rotates with the second carrier 24. The rotation of the second carrier 24 is transferred to the third sun gear 30 connected to this. By the rotation of the third sun gear 30, the third planet gears 31 engaging with the ring gear 32 rotate and orbit around the sun gear 30. Therefore, the rotational power of the sun gear 30 further decreases and is transferred to the carrier 34.

Both of the slide positions of two ring gears 12 and 32 are parts of the switching member 7 are determined in accordance with the rotational position of the gear shift cam plate 8. The gear shift cam plate 8 is a cross-sectional arc-shaped plate that fits the outer periphery of the gear case 9 formed to the tube. The gear shift cam plate 8 is mounted rotatably around the center axis of the gear case 9.

In the gear shift cam plate 8, two cam grooves 41 and 42 are arranged in the axial direction. The cam groove 41 of the input side is a through groove that is formed to polygonal line in accordance with the sliding movement of the ring gear 12. The apical end of a gear shift pin 45 inserted into the cam groove 41 is inserted in the gear case 9 through a guide groove 48 formed to pass through in the gear case 9 (see Fig. 4), and engages with a concave groove of the outer periphery of the ring gear 12. The guide groove 48 is formed in parallel to the axial direction of the reduction mechanical unit 2.

The cam groove 42 of the output side is a through groove that is formed to polygonal line in accordance with the sliding movement of the ring gear 32. The apical end of a gear shift pin 46 inserted into the cam groove 42 is inserted in the gear case 9 through a guide groove 49 formed to pass through in the gear case 9 (see Fig. 4), and engages with a concave groove of the outer periphery of the ring gear 32. The guide groove 49 is formed in parallel to the axial direction of the reduction mechanical unit 2 and is formed on the straight line with the other guide groove 48.

The gear shift cam actuator 8 includes a gear unit 47 that engages with the rotation type gear shift actuator 6 in the end of its circumferential direction. The gear shift actuator 6 includes a dedicated motor (sub motor) 50, a reduction mechanical unit 51 decreasing and transferring the rotational power of the motor 50, and a output unit 52 rotatably driven by the rotational power transferred through the reduction mechanical unit 51. That is, the gear shift actuator 6 slides the switching member 7 in the axial direction through the gear shift cam plate 8.

In this way, in the electric tool according to the present embodiment, the reduction mechanical unit 2 is formed by using the switching member 7 moving slidably in the axial direction, and the gear member 5. The engagement state and the non-engagement state between the gear member 5 and the switching member 7 are switched in accordance with the slide position of the axial direction of the switching member 7.

The switching member 7 is the ring gears 12 and 32 as described above. In addition, the gear member 5 is the first planet gears 11 and the second planet gears 21 for the ring gear 12. The gear member 5 is the second carrier 24 and the engage cog unit 40 for the ring gear 32. The reduction ratio of the whole of the reduction mechanical unit 2 is switched in accordance with the engagement state and the non-engagement state with the switching member 7 and the gear member 5.

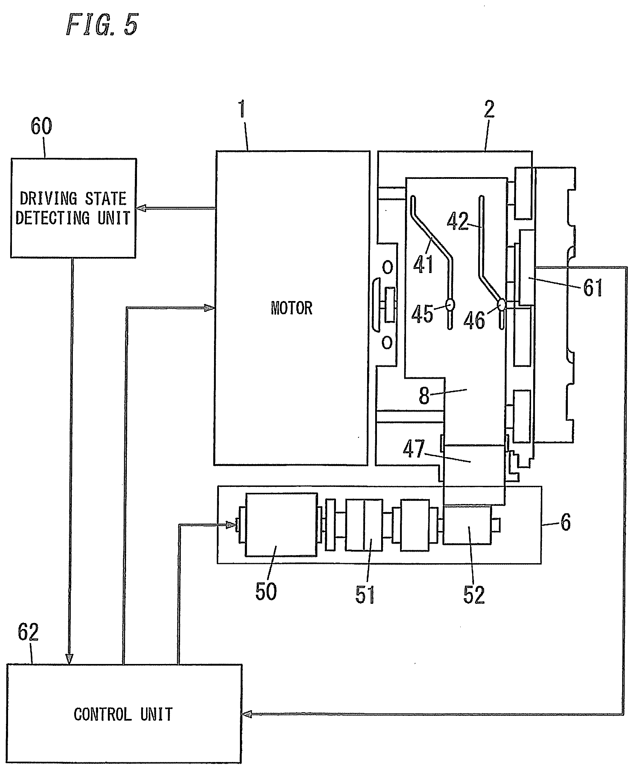

Further, the electric tool according to the present embodiment includes a driving state detecting unit 60 detecting the driving state of the motor 1, a slide position detecting unit 61 detecting the slide position of the switching member 7, and a control unit 62 controlling to drive the motor 1 and the motor 50, as shown schematically in Fig. 5.

The driving state detecting unit 60 detects the driving state of the motor 1 by detecting at least one of the current value, which flows to the motor 1, and the number of rotations of the motor 1. The driving state detecting unit 60 inputs the detection result to the control unit 62. The slide position detecting unit 61 detects indirectly the position of the switching member 7 (that is, each position of the ring gears 12 and 32) by detecting the rotational position of the gear shift cam plate 8, which moves with the switching member 7, for the gear case 9. The slide position detecting unit 61 inputs the detection result to the control unit 62. The slide position detecting unit 61 may be a non-contact type displacement detect sensor or a contact type displacement detect sensor, which contacts the gear shift cam plate 8 directly.

The control unit 62 starts the gear shift actuator 6 in accordance with the driving state of the motor 1, which is detected by the driving state detecting unit 60, and moves slidably the switching member 7. Therefore the control unit 62 modifies the reduction ratio of the reduction mechanical 2.

That is, in the electric tool according to the present embodiment, the gear shift actuator 6, the driving state detecting unit 60, the slide position detecting unit 61, and the control unit 62, which starts the gear shift actuator 6, are included in the reduction ratio switching means.

And, when starting the gear shift actuator 6 (that is, motor 50), the control unit 62 controls the rotational power of the motor 1 so that the rotational power of the motor 1 decreases or increases temporally in accordance with the detection result of the slide position detecting unit 61. Here, the rotational power of the motor 1 decreases or increases in order to decrease (preferably zero) the relative rotation speed upon the engagement as possible between the switching member 7, which is moved slidably, and the gear member 5, with which the switching member 7 is engaged after sliding.

In the below, a case where the gear shift from the first gear to the second gear is performed automatically, a case where the gear shift from the second gear to the third gear is performed automatically, a case where the gear shift from the third gear to the second gear is performed automatically, and a case where the gear shift from the second gear to the first gear is performed automatically are described in turn.

The automatic gear shift from the first gear to the second gear is controlled as below. When the driving state detecting unit 60 determines that the load of the motor 1 reaches a predetermined level while the motor 1 is rotated in the state of the first gear shown in Fig. 6, the automatic gear shift to the second gear is performed.

Specifically, when the current value flowing to the motor 1 becomes a predetermined value or more, when the number of rotations of the motor 1 becomes a predetermined value or less, or when the current value and the number of rotations satisfy a predetermined relation, it is determined that the load of the motor 1 reaches the predetermined level.

The control unit 62, which the detection result is inputted to, starts the motor 50 of the gear shift actuator 6, and rotates and moves the gear shift cam plate 8. The gear shift pin 45 inserted into the cam groove 41 of the input side of the gear shift cam plate 8 is moved slidably to the output side while being guiding by the guide groove 48 arranged to the gear case 9. The gear shift pin 45 slidably moves the ring gear 12, which is a part of the switching member 7, to the output side.

The ring gear 12 that slidably moved stops engaging with the first planet gears 11 at first, and becomes the incomplete switching state shown in Fig. 7. The ring gear 12 is fixed to the gear case 9, and becomes a non-rotation state. On the other hand, the second planet gears 21, which are parts of the gear member 5 of the next engagement target, are rotated and are driven around the axis for the gear case 9 in accordance with the rotational power of the motor 1.

When receiving the detection result that the ring gear 12 is in the incomplete switching state shown in Fig. 7, from the slide position detecting unit 61, at the point, the control unit 62 temporally decreases (includes "reduces to zero") the rotational power of the motor 1. Therefore, as shown in Fig. 8, it is possible to decrease the relative rotation speed between the ring gear 12 and the ring gears 21 (preferably reduce to zero) and to suppress the shock upon the engagement when the ring gear 12 engages with the second planet gears 21. Therefore, it is possible to perform smooth and stable automatic gear shift, and to suppress abrasion and damage of the gear that are caused by the shock.

The control unit 62 may control to partially decrease the rotational power of the motor 1 after start of the gear shift actuator 6. In this case, for example, the control unit 62 decreases the rotational power of the motor 1 gradually by synchronizing with the start of the gear shift actuator 6. When receiving the detection result, which is that the ring gear 12 is in the predetermined incomplete switching state shown in Fig. 7, the control unit 62 further decreases the rotational power of the motor 1.

The automatic gear shift from the second gear to the third gear is controlled as below. When the driving state detecting unit 60 determines that the load of the motor 1 reaches a predetermined level while the motor 1 is rotated in the state of the second gear shown in Fig. 8, the automatic gear shift to the third gear is performed. Specifically, when the current value flowing to the motor 1 becomes a predetermined value or more, when the number of rotations of the motor 1 becomes a predetermined value or less, or when the current value and the number of rotations satisfy a predetermined relation, it is determined that the load of the motor 1 reaches the predetermined level.

The control unit 62, which the detection result is inputted to, starts the motor 50 of the gear shift actuator 6, and rotates and moves the gear shift cam plate 8. The gear shift pin 46 inserted into the cam groove 42 of the output side of the gear shift cam plate 8 is moved slidably to the output side while being guiding by the guide groove 49 arranged to the gear case 9. The gear shift pin 46 slidably moves the ring gear 32, which is a part of the switching member 7, to the output side.

The ring gear 32 that has slidably moved stops engaging with the second carrier 24 at first, and becomes the incomplete switching state shown in Fig. 9. This time, the ring gear 32 engages with the third planet gears 31, and is not fixed to the gear case 9, and becomes a rotation state.

The ring gear 32 in the incomplete switching state shown in Fig. 9 continues to rotate by inertia of rotation when engaged with the carrier 24 in the second gear, and at the same time as this, and receives the rotational power in the opposite direction of the inertia of rotation, by the reactive force from the third planet gears 31 driven by the motor 1. On the other hand, the engage cog unit 40 serving as the gear member 5 which the ring gear 32 engages with next is fixed to the gear case 9.

The control unit 62 decreases (preferably zero) the relative rotation speed between the ring gear 32 and the engage cog unit 40 by using the opposite direction rotational power actively. That is, when the slide position detecting unit 61 detects that the ring gear 32 is in the predetermined incomplete switching state shown in Fig. 9, at the same time, the control unit 62 stops the sliding movement of the ring gear 32 temporally. And, the rotational power of the motor 1 is increased temporally and the rotation speed of the ring gear 32 for the gear case 9 is decreased immediately. On that basis, the sliding movement of the ring gear 32 is restarted and the rotation speed of the ring gear 32 is adjusted to reduce to zero as possible when the ring gear 32 engages with the engage cog unit 40.

Therefore, it is possible to suppress the shock that is generated when the ring gear 32 engages with the engage cog unit 40 shown in Fig. 10, to perform smooth and stable automatic gear shift, and to suppress abrasion and damage of the gear that are caused by the shock.

The ring gear 32 is not stopped moving slidably temporally, and the rotation speed may be adjusted by only increasing the rotational power of the motor 1 temporally, or the rotation speed may be adjusted by only stopping the ring gear 32 temporally, or the following control may be used: for decreasing gradually the rotational power of the motor 1 synchronized with the start of the gear shift actuator 6, and decreasing the rotation by the inertia of rotation of the ring gear 32 when the ring gear 32 engages with the carrier 24 in the second gear.

The automatic gear shift from the third gear to the second gear is controlled as below. When the driving state detecting unit 60 determines that the load of the motor 1 reaches a predetermined level while the motor 1 is rotated in the state of the third gear shown in Fig. 10, the automatic gear shift to the second gear is performed.

Specifically, when the current value flowing to the motor 1 becomes a predetermined value or less, when the number of rotations of the motor 1 is a predetermined value or more, or when the current value and the number of rotations satisfy a predetermined relation, it is determined that the load of the motor 1 reaches the predetermined level.

The control unit 62, which the detection result is inputted to, starts the motor 50 of the gear shift actuator 6, and rotates and moves the gear shift cam plate 8. The gear shift pin 46 inserted into the cam groove 42 of the output side of the gear shift cam plate 8 slidably moves the ring gear 32, which is the switching member 7, to the input side.

The ring gear 32 that has slidably moved stops engaging with the engage cog unit 40 at first, and becomes the incomplete switching state shown in Fig. 9. This time, the ring gear 32 engages with the third planet gears 31, and is not fixed to the gear case 9, and becomes a rotation state.

The ring gear 32 in the incomplete switching state shown in Fig. 9 receives the rotational power in the opposite direction against the rotation direction of the motor 1, by the reactive force from the third planet gears 31 driven by the motor 1. On the other hand, the second carrier 24 serving as the gear member 5 which the ring gear 32 engages with next is rotated in the rotation direction of the motor 1.

When receiving the detection result that the ring gear 32 is in the predetermined incomplete switching state shown in Fig. 9, from the slide position detecting unit 61, at the point, the control unit 62 temporally decreases (includes zero) the rotational power of the motor 1. Therefore, as shown in Fig. 8, it is possible to decrease (preferably zero) the relative rotation speed between the ring gear 32 and the ring gear 24 when the ring gear 32 engages with the second carrier 24, and to suppress the shock upon the engagement. Therefore, it is possible to perform a smooth and stable automatic gear shift, and to suppress abrasion and damage of the gear that are caused by the shock.

In addition, the control unit 62 may control to partially decrease the rotational power of the motor 1 after start of the gear shift actuator 6. In this case, for example, the control unit 62 decreases the rotational power of the motor 1 gradually by synchronizing with the start of the gear shift actuator 6. When the detection result is inputted, which is that the ring gear 32 is in the predetermined incomplete switching state shown in Fig. 9, the control unit 62 further decreases the rotational power of the motor 1

The automatic gear shift from the second gear to the first gear is controlled as below. When the driving state detecting unit 60 determines that the load of the motor 1 reaches a predetermined level while the motor 1 is rotated by the reduction mechanical unit 2 in the state of the second gear shown in Fig. 8, the automatic gear shift to the first gear is performed. Specifically, when the current value flowing to the motor 1 becomes a predetermined value or less, when the number of rotations of the motor 1 becomes a predetermined value or more, or when the current value and the number of rotations satisfy a predetermined relation, it is determined that the load of the motor 1 reaches the predetermined level.

The control unit 62, which the detection result is inputted to, starts the motor 50 of the gear shift actuator 6, and rotates and moves the gear shift cam plate 8. The gear shift pin 45 inserted into the cam groove 41 of the input side of the gear shift cam plate 8 slidably moves the ring gear 12, which is the switching member 7, to the input side.

The ring gear 12 that has slidably moved stops engaging with the second planet gears 21 at first, and becomes the incomplete switching state shown in Fig. 7. This time, the ring gear 12 is not fixed to the gear case 9, and becomes a rotation state. On the other hand, the first planet gears 11 serving as the gear member 5 of the next engagement target are rotated and are driven around the axis for the gear case 9.

When receiving the detection result that the ring gear 12 is in the predetermined incomplete switching state shown in Fig. 7, from the slide position detecting unit 61, at the point, the control unit 62 temporally decreases the rotational power of the motor 1. Therefore, as shown in Fig. 6, it is possible to decrease the relative rotation speed between the second gear 12 and the first gear 11 (preferably deduce to zero) and to suppress the shock upon the engagement when the ring gear 12 engages with the first planet gears 11. Therefore, it is possible to perform smooth and stable automatic gear shift, and to suppress abrasion and damage of the gear that are caused by the shock.

In addition, the control unit 62 may control to partially decrease the rotational power of the motor 1 after start of the gear shift actuator 6. In this case, for example, the control unit 62 decreases the rotational power of the motor 1 gradually in synchronization with the start of the gear shift actuator 6. When the detection result is inputted, which is that the ring gear 12 is in the predetermined incomplete switching state shown in Fig. 7, the control unit 62 further decreases the rotational power of the motor 1.

As above, the control unit 62 according to the present example starts the gear shift actuator 6 in accordance with the driving state of the motor 1, and decreases or increases the rotational power of the motor 1 temporally so as to correspond to the present position of the detected switching member 7 (the ring gears 12 and 32). The decrease of the rotational power includes case of stopping the motor 1. Therefore, it is possible to perform smooth and stable automatic gear shift, and to suppress abrasion and damage of the gear that are caused by the shock. The control unit 62 may decrease or increase the rotational power of the motor 1 gradually in synchronization with start of the gear shift actuator 6.

In addition, when it is difficult to engage the switching member 7 (the ring gear 12 or the ring gear 32) with the gear member 5 which is an object (the planet gears 11, the planet gears 21, the carrier 24 or the engage cog unit 40), the control unit 62 controls to modify the relative rotation speed between the switching member 7 and the gear member 5. Therefore, it is possible to resolve immediately the state in which the switching of the reduction ratio has not completed yet caused to the interruption of the sliding movement due to difficulty of the engagement, and to perform further smooth and stable automatic gear shift.

Specifically, the control is performed in case where the cogs between the switching member 7 and the gear member 5 do not engage with each other well after decreasing the rotational power when the reduction ratio is switched (when the gear is shifted). That is, the control is performed when a gear shift is in the incomplete state, that is, when it is determined by the detection result of the slide position detecting unit 61 that the switching member 7 has not moved slidably to a predetermined target position yet, after controlling to modify the rotational power temporally. In this case (when the gear shift is in the incomplete state), the obstacle of the work is generated because the gear shift is not performed well, and further the breakdown is caused because the overload is put to the gear shift actuator 6.

On the other hand, when the gear shift is in the incomplete state, the control unit 62 further decreases or increases the decreased rotational power. Therefore, the control unit 62 modifies the relative rotation speed between the switching member 7 and the gear member 5. The relative rotation position between the switching member 7 and the gear member 5 is modified from the incomplete gear shift state in accordance with the modification of the relative rotation speed. Therefore, both members 7 and 5 easily engage with each other.

Further, when it is generated again that the switching member 7 has not moved slidably to a predetermined target position, the control unit 62 repeats to modify the relative rotation speed again, and repeats the same control until the sliding movement is performed. When the state in which the sliding movement is not performed is generated a predetermined times, the control unit 62 may be configured to stop driving the motor 1 when detecting this.

In addition, when the gear shift is in the incomplete state, the control unit 62 according to the present embodiment controls to modify the drive control of the gear shift actuator 6 so as to correspond to the position of the switching member 7 (the ring gears 12 and 32) that the slide position detecting unit 61. Therefore, it is possible to perform further smooth and stable automatic gear shift, and to suppress further abrasion and damage of the gear that are caused by the shock.

As below, the control of the gear shift actuator 6 is described specifically.

When the gear shift is in the incomplete state, the control unit 62 reverses once a rotation direction of the motor 50 of the gear shift actuator 6. That is, the control unit 62 reverses the direction in which the switching member 7 is slidably moved, through the gear shift cam plate 8 during a predetermined period, and releases once the switching member 7 from the gear member 5 that is an object.

The relative rotation position between the switching member 7 and the gear member 5 is modified by the rotational power from the motor 1 while both members 7 and 5 are released. Therefore, when the motor 50 of the gear shift actuator 6 is rotated normally again and the switching member 7 is moved slidably to the side of the gear member 5, it becomes easy for both members 7 and 5 to engage with each other. When the state in which the switching member 7 has not moved slidably to the predetermined target position is generated again, the control unit 62 repeats the same control. When the states are generated predetermined number of times, in which the switching member 7 has not moved slidably, the control unit 62 that detects the states may stop driving the motor 1.

As described above, the electric tool includes the motor 1, the reduction mechanical unit 2, and the reduction ratio switching means. The motor 1 is the drive source. The motor 1 is configured to generate the rotational power. The reduction mechanical unit 2 decreases and transfers the rotational power of the motor 1. The reduction ratio switching means switches the reduction ratio of the reduction mechanical unit 2.

The reduction mechanical unit 2 includes the switching member 7 and the gear member 5. The switching member 7 is configured to move slidably in the axial direction of the switching member 7. The gear member 5 switches the engagement state and the non-engagement state with the switching member 7 in accordance with the slide position in the axial direction of the switching member 7. In other words, the gear member 5 is configured to move slidably in the axial direction. Therefore, the gear member 5 is configured to be movable between the slide position upon the engagement state in which the gear member 5 and the switching member 7 engage each other, and the slide position upon the non-engagement state in which the gear member 5 and the switching member 7 do not engage with each other. The reduction mechanical unit 2 is configured to switch the reduction ratio by the switching member 7 and the gear member 5.

The reduction ratio switching means includes the gear shift actuator 6, the slide position detecting unit 61, and the control unit 62. The gear shift actuator 6 moves slidably the switching member 7 in the axial direction. The slide position detecting unit 61 is configured to detect the slide position of the switching member 7. The control unit 62 is configured to start the gear shift actuator 6. The control unit 62 modifies the rotational power of the motor 1 temporally in accordance with the detection result of the slide position detecting unit 61. More specifically, the control unit 62 controls the motor 1 and varies temporally the rotational power that is generated by the motor 1 in accordance with the detection result of the slide position detecting unit 61. The control unit 62 is configured to drive the gear shift actuator 6. When the control unit 62 determines that the switching member 7 has not moved slidably yet to the predetermined target position in accordance with the detection result of the slide position detecting unit 61, the control unit 62 recognizes that the gear shift is in the incomplete state. When the control unit 62 modifies the rotational power temporally and recognizes that the gear shift is in the incomplete state, the control unit 62 modifies the relative rotation speed between the switching member 7 and the gear member 5.

In addition, the reduction mechanical unit 2 generates a decreased rotational power by decreasing the rotational power that is generated by the motor 1. The reduction mechanical unit 2 transfers the decreased rotational power to the output shaft 4. More specifically, the reduction mechanical unit 2 decreases the rotational power that is generated by the motor 1 with the predetermined reduction ratio and generates the decreased rotational power. The reduction mechanical unit 2 transfers the decreased rotational power to the output shaft 4.

In the present embodiment, the reduction mechanical unit 2 transfers the rotational power to the output shaft 4 through a drive transmission unit 3. However, the reduction mechanical unit 2 may transfer the rotational power to the output shaft 4 directly. In addition, the reduction mechanical unit 2 may transfer the rotational power to the output shaft 4 indirectly.

In addition, the reduction mechanical unit 2 has the axial direction.

In addition, the slide position detecting unit 61 detects the slide position of the switching member 7 and outputs the detection result that shows the slide position of the switching member 7.

In addition, the control unit 62 is configured to drive the gear shift actuator 6 in accordance with the drive control.

In addition, the electric tool includes the guide unit 15. The switching member 7 is configured to be guided by the guide unit 15. Therefore, the switching member 7 is configured to move slidably in the axial direction.

In addition, the electric tool further includes the gear case 9 that stores the reduction mechanical unit 2. The slide position detecting unit 61 is configured to detect the position of the switching member 7 for the gear case 9.

In addition, the electric tool further includes the gear shift cam plate 8. The gear shift actuator 6 is configured to move slidably the switching member 7 of the reduction mechanical unit 2 through the gear shift cam plate 8. The slide position detecting unit 61 is configured to detect the rotation position of the gear shift cam plate 8 for the gear case 9. Therefore, the slide position detecting unit 61 is configured to detect the position of the switching member 7 for the gear case 9.

In addition, the electric tool includes the driving state detecting unit 60. The driving state detecting unit 60 is configured to detect the driving state of the motor 1 and to output the detection result. The control unit 62 controls the gear shift actuator 6 in accordance with the driving state of the motor 1 detected by the driving state detecting unit 60 and slidably moves the switching member 7.

In addition, the driving state detecting unit 60 is configured to detect at least one of the current value flowing to the motor 1 and the number of rotations of the motor 1.

In addition, the switching member 7 includes the ring gear 12. The gear member 5 includes the planet gears 11 and the planet gears 21.

The ring gear 12 is selectively located at the first position shown in Fig. 6 (a), the second position shown in Fig. 7, and the third position shown in Fig. 8 (a). When the ring gear 12 is located at the first position, the ring gear 12 engages with the planet gears 11. When ring gear 12 is located at the third position, the ring gear 12 engages with the planet gears 21. The second position is located between the first position and the third position. When the ring gear 12 is located at the second position, the ring gear 12 does not engage with the planet gears 11 and does not engage with the planet gears 21. The state in which the ring gear 12 is located at the first position is defined as the engagement state in which the switching member 7 and the gear member 5 engage with each other. The state in which the ring gear 12 is located at the third position is defined as the engagement state in which the switching member 7 and the gear member 5 engage with each other. The state in which the ring gear 12 is located at the second position is defined as the non-engagement state in which the switching member 7 and the gear member 5 do not engage with each other.

The switching member 7 is not limited to the ring gear 12. In addition, the gear member 5 is not limited to the planet gears 11 and the planet gears 21.

That is, the switching member 7 includes the first gear. The gear member 5 includes a first gear member and a second gear member. The first gear is located at a first position, a second position, and a third position selectively. When being located at the first position, the first gear engages with the first gear member. When being located at the third position, the first gear engages with the second gear member. The second position is located between the first position and the third position. When the first gear is located at the second position, the first gear does not engage with the first gear member and does not engage with the second gear member. The state in which the first gear is located at the first position is defined as the engagement state in which the switching member 7 and the gear member 5 engage with each other. The state in which the first gear is located at the third position is defined as the engagement state in which the switching member 7 engages with the gear member 5. The state in which the first gear is located at the second position is defined as the non-engagement state in which the switching member 7 does not engage with the gear member 5.

The first gear adopts the ring gear 12. The first gear member adopts the planet gears 11. The second gear member adopts the planet gears 21.

In addition, when the first gear is located at the first position, the control unit 62 controls the motor 1 so as to generate the predetermined rotational power. Under the state where the first gear is located at the first position, the driving state detecting unit 60 determines whether or not the driving state of the motor 1 satisfies a predetermined state. When the driving state detecting unit 60 determines that the driving state of the motor 1 satisfies the predetermined state, the control unit 62 drives the gear shift actuator 6, and moves the first gear from the first position to the third position through the second position. When the first gear is located at the second position, the slide position detecting unit 61 detects that the gear shift is in the incomplete state. When the slide position detecting unit 61 detects that the gear shift is in the incomplete state, the control unit 62 controls the motor 1 to generate a lower rotational power than a predetermined rotational power, thereby decreasing the relative rotation speed between the first gear and the second gear member.

When the first gear is located at the third position, the slide position detecting unit 61 detects that the gear shift is in the complete state. When the slide position detecting unit 61 detects that the gear shift is in the complete state, the control unit 62 controls the motor 1 to generate a higher rotational power than the low rotational power.

The low rotational power includes zero.

The gear shift from the first gear to the second gear is performed automatically. Similarly, the gear shift from the second gear to the third gear is performed automatically.

In this case, under the state where the first gear is located at the first position, the driving state detecting unit 60 determines whether or not the current value flowing to the motor 1 becomes a predetermined current value or more. Therefore, the driving state detecting unit 60 determines whether or not the driving state of the motor 1 satisfies a predetermined state.

In addition, in an example, under the state where the first gear is located at the first position, the driving state detecting unit 60 determines whether or not the number of rotations of the motor 1 becomes a predetermined number of rotations or less. Therefore, the driving state detecting unit 60 determines whether or not the driving state of the motor 1 satisfies a predetermined state.

In addition, in an example, under the state where the first gear is located at the first position, the driving state detecting unit 60 determines whether or not the current value flowing to the motor 1 is a predetermined current value, and whether or not the number of rotations of the motor 1 becomes a predetermined number of rotations or less. Therefore, the driving state detecting unit 60 determines whether or not the driving state of the motor 1 satisfies a predetermined state.

In addition, in an example, under the state where the first gear is located at the first position, the driving state detecting unit 60 determines whether or not the current value flowing to the motor 1 and the number of rotations of the motor 1 satisfy predetermined states. Therefore, the driving state detecting unit 60 determines whether or not the driving state of the motor 1 satisfies a predetermined state.

That is, under the state where the first gear is located at the first position, the driving state detecting unit 60 determines at least one of whether or not the current value flowing to the motor 1 becomes a predetermined current value or more, and whether or not the number of rotations of the motor 1 is a predetermined number of rotations or less. The driving state detecting unit 60 determines whether or not the driving state of the motor 1 satisfies a predetermined state on the basis of at least one of whether or not the current value flowing to the motor 1 becomes a predetermined current value or more, and whether or not the number of rotations of the motor 1 is a predetermined number of rotations or less.

The gear shift from the third gear to the second gear is performed automatically. Similarly, the gear shift from the second gear to the first gear is performed automatically.

In this case, when the first gear is located at the third position, the control unit 62 controls the motor 1 so that a predetermined rotational power is generated. Under the state where the first gear is located at the third position, the driving state detecting unit 60 determines whether or not the driving state of the motor 1 satisfies a predetermined state. When the driving state detecting unit 60 determines that the driving state of the motor 1 satisfies a predetermined state, the control unit 62 drives the gear shift actuator 6 and transfers the first gear through the second position from the third position to the first position. When the first gear is located at the second position, the slide position detecting unit 61 detects that the gear shift is in the incomplete state. When the slide position detecting unit 61 detects that the gear shift is in the incomplete state, the control unit 62 controls the motor 1 to generate the low rotational power lower than a predetermined rotational power, thereby decreasing the relative rotation speed between the first gear and the second gear member.

When the first gear is located at the first position, the slide position detecting unit 61 detects that the gear shift is in the complete state. When the slide position detecting unit 61 detects that the gear shift is in the complete state, the control unit 62 controls the motor 1 to generate the higher rotational power higher than the low rotational power.

In this case, under the state where the first gear is located at the third position, the driving state detecting unit 60 determines whether or not the current value flowing to the motor 1 becomes the predetermined current or less. Therefore, the driving state detecting unit 60 determines whether or not the driving state of the motor 1 satisfies a predetermined state.

In addition, under the state where the first gear is located at the third position, the driving state detecting unit 60 determines whether or not the number of rotations of the motor 1 is a predetermined number of rotations or more. Therefore, the driving state detecting unit 60 determines whether or not the driving state of the motor 1 satisfies a predetermined state.

In addition, in an example, under the state where the first gear is located at the third position, the driving state detecting unit 60 determines whether or not the current value flowing to the motor 1 is a predetermined current value or less and whether or not the number of rotations of the motor 1 becomes the predetermined number of rotations or more. Therefore, the driving state detecting unit 60 determines whether or not the driving state of the motor 1 satisfies a predetermined state.

That is, under the state where the first gear is located at the third position, the driving state detecting unit 60 determines at least one of whether or not the current value flowing to the motor 1 becomes a predetermined current value or less, and whether or not the number of rotations of the motor 1 becomes the predetermined number of rotations or more. The driving state detecting unit 60 determines whether or not the driving state of the motor 1 satisfies a predetermined state on the basis of at least one of whether or not the current value flowing to the motor 1 becomes a predetermined current value or less, and whether or not the number of rotations of the motor 1 becomes the predetermined number of rotations or more.

The control unit 62 may modify the drive control of the gear shift actuator 6 in accordance with the detection result of the slide position detecting unit 61.

When the gear shift is in the incomplete state, the control unit 62 may reverse once the slide direction of the switching member 7 by the gear shift actuator 6.

In other words, when the gear shift is in the incomplete state, the control unit 62 may move once the switching member 7 to the opposite direction against the predetermined target position by the gear shift actuator 6. Subsequently, when the gear shift is in the incomplete state, the control unit 62 may move the switching member 7 to the predetermined target position by the gear shift actuator 6.

In addition, the electric tool further includes the gear case 9 that stores the reduction mechanical unit 2. The slide position detecting unit 61 is configured to detect the position of the switching member 7 for the gear case 9.

In addition, the electric tool further includes the gear shift cam plate 8. The gear shift actuator 6 is configured to move slidably the switching member 7 of the reduction mechanical unit 2 through the gear shift cam plate 8. The slide position detecting unit 61 is configured to detect the rotational position of the gear shift cam plate 8 for the gear case 9, and is configured to detect the position of the switching member 7 for the gear case 9.

Next, electric tools according to another embodiments of the present invention are described in turn. The detailed description about the constitution that is the same as the above first embodiment is omitted, and the characteristic constitution that is different from that of the first embodiment is described specifically.

### Second example

When the gear shift is in the incomplete state, that is, when the gears do not engage with each other well and the gear shift is failed, an electric tool according to the present embodiment example is configured to modify the drive control of the gear shift actuator 6. Therefore, smooth and stable automatic gear shift is performed, or abrasion and damage of the gear that are caused by the shock is suppressed. However, in the present example, the method for modifying the drive control of the gear shift actuator 6 is different from that of the first embodiment.

Specifically, when it is determined that the gear shift is in the incomplete state, that is, when the switching member 7 has not moved slidably to a predetermined target position, the control unit 62 increases the rotational power of the motor 50 of the gear shift actuator 6. That is, it becomes easy for both members 7 and 5 to engage with each other by modifying the slide drive force for sliding the switching member 7 through the gear shift cam plate 8.

In other words, the switching member 7 includes the first gear. The gear member 5 includes the first gear member and the second gear member. The first gear is located at the first position, the second position, and the third position selectively. When being located at the first position, the first gear engages with the first gear member. When being located at the third position, the first gear engages with the second gear member. The second position is located between the first position and the third position. When being located at the second position, the first gear does not engage with the first gear member, and does not engage with the second gear. The state in which the first gear is located at the first position is defined as the engagement state in which the switching member 7 engages with the gear member 5. The state in which the first gear is located at the third position is defined as the engagement state in which the switching member 7 engages with the gear member 5. The state in which the first gear is located at the second position is defined as the non-engagement state in which the switching member 7 does not engage with the gear member 5.

The gear shift actuator 6 includes the motor 50. The motor 50 is configured to generate the rotational power. The gear shift actuator 6 slides the switching member 7 in the axial direction, using the force in accordance with the rotational power that is generated by the motor 50. When the slide position detecting unit 61 detects that the first gear is located at the second position, the control unit 62 increases the rotational power of the motor 50 of the gear shift actuator 6.

More specifically, when the first gear is located at the first position, the control unit 62 controls the motor 1 to generate the predetermined rotational power. Under the state where the first gear is located at the first position, the driving state detecting unit 60 determines whether or not the driving state of the motor 1 satisfies the predetermined state. When the driving state detecting unit 60 determines that the driving state of the motor 1 satisfies the predetermined state, the control unit 62 drives the gear shift actuator 6 and moves the first gear through the second position from the first position to the third position. When the first gear is located at the second position, the slide position detecting unit 61 detects that the gear shift is in the incomplete state. When the slide position detecting unit 61 detects that the gear shift is in the incomplete state, the control unit 62 controls the motor 50 of the gear shift actuator 6 to generate the higher rotational power than the predetermined rotational power. Therefore, the gear shift actuator 6 slides the switching member 7 in the axial direction, using the force in accordance with the rotational power that is generated by the motor 50. That is, the gear shift actuator 6 slides the first gear to the third position in the axial direction, using the force in accordance with the rotational power that is generated by the motor 50.

The control unit 62 is capable of performing the arbitrary modification of the drive force, such as not only increasing the rotational power of the motor 50 simply but also increasing it after decreasing once, repeating the decrease and the increase with a predetermined cycle, or the like. In addition, when the switching member 7 has not moved slidably to the predetermined target position if the slide drive force is modified, the control unit 62 may be configured to stop driving the motor 1 when detecting this.

### Third example

When the gear shift is in the incomplete state and that the rotational power of the motor 1 stops or substantially stops is determined by the detection result of the driving state detecting unit 60, an electric tool according to the present example is configured to maintain the drive of the gear shift actuator 6 and to modify the rotational power of the motor 1. Therefore, smooth and stable automatic gear shift is performed, and the abrasion and damage that are caused by the shock are suppressed. However, the method for modifying the control when the gear shift is failed (when the gear shift is in the incomplete state) of the present example is different from the method of the first example.

Specifically, when the gear shift is in the incomplete state and the rotational power of the motor 1 stops or substantially stops, the control unit 62 modifies the relative rotation speed between the switching member 7 and the gear member 5 by increasing the rotational power of the motor 1 in the state in which the drive of the gear shift actuator 6 is maintained.

Further, when the control unit 62 increases the rotational power of the motor 1, the control unit 62 modifies the rotational acceleration of the rotational power in the sliding movement state so as to be larger than that in the sliding non-movement state. That is, the control unit 62 controls that the rotational acceleration in the state in which both gears engage with each other well and the switching member 7 slides so as to be larger than that in the state in which both gears do not engage with each other well and the switching member 7 does not slide.

The control unit 62 is capable of performing the arbitrary modification of the drive force, such as not only increasing the rotational power of the motor 50 simply but also increasing it after decreasing once, repeating the decrease and the increase with a predetermined cycle, or the like. In addition, when the switching member 7 has not moved slidably to the predetermined target position if the slide drive force is modified, the control unit 62 may be configured to stop driving the motor 1 when detecting this.

In addition, the state in which the motor 1 is not substantially driven includes not only the state the motor 1 decreases the state in which it is detected that the control unit 62 finishes the work, and stops driving the motor 1. Specifically, that state includes the state in which the load of the motor 1 is substantially zero, the operation of the trigger switch 103 is released, or the load reaches a predetermined level and the motor 1 stops. In the automatic gear shift in the state, the control unit 62 controls to drive once the motor 1 that stops when the gear shift is in the incomplete state.

### Embodiment of the invention

When the gear shift is in the incomplete state and that the rotational power of the motor 1 stops or substantially stops is determined by the detection result of the driving state detecting unit 60, an electric tool according to the present embodiment is configured to stop driving the gear shift actuator 6 and to modify the rotational power of the motor 1. Therefore, smooth and stable automatic gear shift is performed and abrasion and damage that are caused by the shock are suppressed. However, the method for controlling after judging of the present embodiment is different from the method of the third example.

Specifically, when determining that the gear shift is in the incomplete state and the motor 1 is not substantially driven, the control unit 62 stops the drive of the gear shift actuator 6 once, and increases the rotational power of the motor 1, and then restarts the drive of the gear shift actuator 6. That is, when the gear shift is in the incomplete state, the control unit 62 interrupts the drive of the gear shift actuator 6, and increases the rotational power of the motor 1, and modifies the relative rotation speed between the switching member 7 and the gear member 5, thereby restarting the drive of the gear shift actuator 6.

Further, when the control unit 62 increases the rotational power of the motor 1, the control unit 62 modifies the rotational acceleration of the rotational power in the sliding movement state so as to be larger than that in the sliding non-movement state. That is, the acceleration is controlled that the rotational acceleration in the state in which both gears engage with each other well and the switching member 7 slides is larger than that in the state in which both gears do not engage with each other well and the switching member 7 do not slide.

The control unit 62 is capable of performing the arbitrary modification of the drive force such as not only increasing the rotational power of the motor 1 simply but also increasing it after decreasing once, repeating the decrease and the increase a predetermined cycle, or the like. In addition, when the switching member 7 has not moved slidably to the predetermined target position if the slide drive force is modified, the control unit 62 may be configured to stop driving the motor 1 when detecting this.

In addition, the state in which the motor 1 does not substantially drive includes not only the state in which the rotational power of the motor 1 decreases when the gear shifts but also the state in which the control unit 62 detects that the work is finished and stops driving the motor 1. Specifically, that state includes the state in which the load of the motor 1 substantially reduces to zero, the operation of the trigger switch 103 is released, or the load reaches predetermined level and the motor 1 stops. In the automatic gear shift in the state, the control unit 62 drives once the motor 1 that stops when the gear shift is in the incomplete state.

### Fifth example

The slide position detecting unit 61 of an electric tool according to the present example is different from that of the electric tool according to the first example. The slide position detecting unit 61 according to the present embodiment is configured not to detect the position of the other member working with the switching member 7 (the gear shift cam plate 8) as like the first embodiment, but to directly detect the position of the switching member 7.

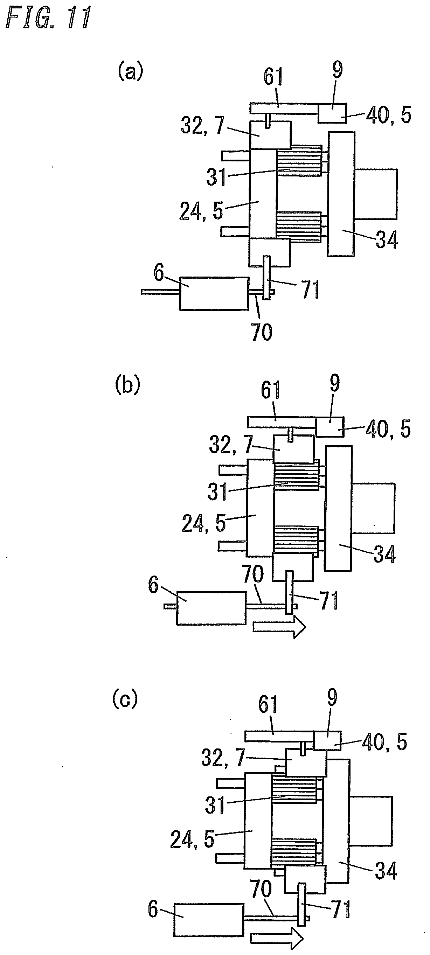

Fig. 11 shows the slide position detecting unit 61 according to the present example schematically. In the present example, the gear shift actuator 6 is a direct acting type actuator that consists of the solenoid, and is configured to modify the amount of projection of the plunger 70 in the shaft direction at will. The ring gear 32 that is a part of the switching member 7 is connected to the plunger 70 through the connect member 71. The ring gear 32 is configured rotatably around the axis for the connect member 71, and slidably with the connect member 71 in an axial direction.

The slide position detecting unit 61 is a displacement detect sensor that is established in the gear case 9 to be located at the outer side in a radical direction of the ring gear 32. This sensor is a contact type one that contacts the ring gear 32 directly, but may be a non-contact type one.

### sixth example

The slide position detecting unit 61 of an electric tool according to the present example is different from that of the electric tool according to the first example. The slide position detecting unit 61 according to the present example does not detect the positions of the switching member 7 and the other member that works with the switching member 7, but detects the driving state of the gear shift actuator 6, and detects the position of the switching member 7 on the basis of the detection result.

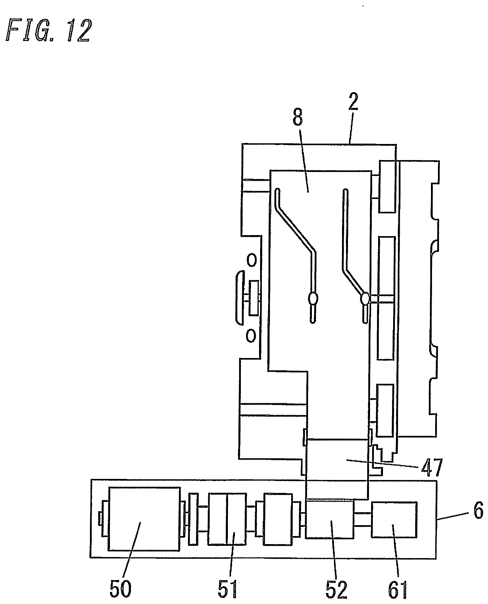

Fig. 12 schematically shows the slide position detecting unit 61 according to the present example. The slide position detecting unit 61 according to the present example is a displacement sensor that detects the rotation position of the output unit 52 that is included in the rotation type gear shift actuator 6. This displacement sensor may be a contact type one that contacts the output unit 52 directly, or may be a non-contact type one.

### Seventh example

The slide position detecting unit 61 of an electric tool according to the present example is different from that of the electric tool according to the first example. The slide position detecting unit 61 according to the present example indirectly detects the position of the switching member 7 by detecting the driving state of the gear shift actuator 6. In this point, the slide position detecting unit 61 according to the present example is the same as that of the embodiment of the invention. However, in the below point, the slide position detecting unit 61 according to the present example is different from that of the embodiment.

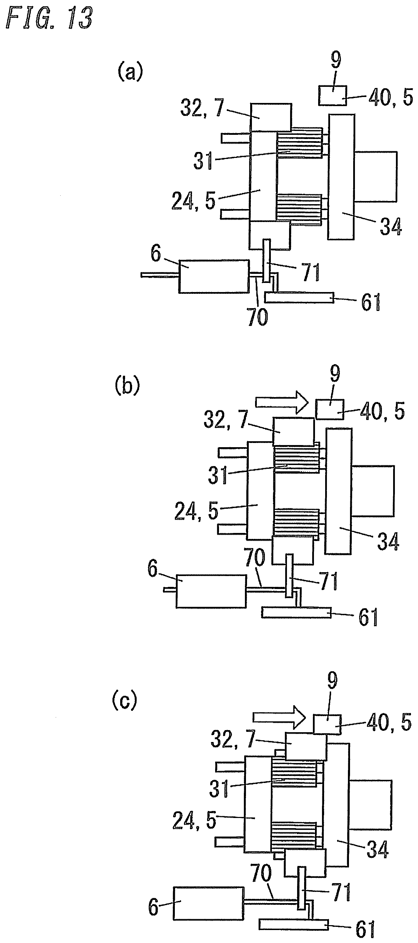

Fig. 13 shows the slide position detecting unit 61 according to the present example schematically. In the present example, the gear shift actuator 6 is a direct acting type actuator that consists of the solenoid, and is configured to modify the amount of projection of the plunger 70 in the shaft direction at will. The ring gear 32 that is a part of the switching member 7 is configured to move rotatably around the axis for the connect member 71, and slidably with the connect member 71 in axial direction 71.

The slide position detecting unit 61 is a displacement detect sensor that detects the project position of the plunger 70 that is included in the direct acting type gear shift actuator 6. This sensor is a contact type one that directly contacts the plunger 70, but may be a non-contact type one.

As explained above, each of the electric tools include the motor 1 serving as a drive resource, the reduction mechanical unit 2 that decreases and transfers the rotational power of the motor 1, and the reduction ratio switching means switching the reduction ratio of the reduction mechanical unit 2. The reduction mechanical unit 2 is configured so that the reduction ratio is switched, using the switching member 7 moving slidably in the axial direction and the gear member 5 by which the engagement state with the switching member 7 and the gear member 5 and the non-engagement state with the switching member 7 and the gear member 5 are switched in accordance with the slide position of the switching member 7 in the axial direction. The reduction ratio switching means the gear shift actuator 6 sliding the switching member 7 in the axial direction, the driving state detecting unit 60 detecting the driving state of the motor 1, the slide position detecting unit 61 detecting the slide position of the switching member 7, and the control unit 62, which starts the gear shift actuator 6 in accordance with the detection result of the driving state detecting unit 60, and decreases or increases temporally the rotational power of the motor 1 in accordance with the detection result of the slide position detecting unit 61. When the control unit 62 drives the gear shift actuator 6 and modifies the rotational power temporally, and the gear shift is in the incomplete state that the switching member 7 has not moved slidably yet to the predetermined target position is determined by the detection result of the slide position detecting unit 61, the control unit 62 modifies the relative rotation speed between the switching member 7 and the gear member 5.

In the electric tool including the above construction, it is possible to control to start the gear shift actuator 6, switch the rotational power of the motor 1 in accordance with the slide position of the switching member 7 that is detected actually when moving slidably the switching member 7 by some amounts, and decrease the relative rotation speed between the switching member 7 and the gear member 5 as much as possible. Therefore, it is possible to complete the automatic modification of the reduction ratio smoothly in short time while driving the motor 1 rotatably.

When it is determined that the gear shift is in the incomplete state, that is, when the switching member 7 does not engage with the gear member 5 well, it is possible to modify the relative rotation speed between the switching member 7 and the gear member 5, and then to modify the relative rotation position between both members 7 and 5. Therefore, it is possible that it becomes easy for the switching member 7 to engage with the gear member 5, and it is possible easily resolve the incomplete gear shift state.

That is, according to the electric tool, it is possible to suppress the shock upon the engagement when the reduction ratio is modified, to complete the modification of the reduction ratio quickly and smoothly, and resolve the interruption of the slide in accordance with the state in which it is difficult to engage when the reduction ratio is modified.

In addition, in each of the electric tools, the control unit 62 further modifies the drive control of the gear shift actuator 6 in accordance with the detection result of the slide position detecting unit 61. That is, it is possible to control to modify not only the rotational power of the motor 1 but also the drive control of the gear shift actuator 6 arbitrarily in accordance with the slide position of the switching member 7 detected actually. Therefore, when the gear shift is in the incomplete state, it becomes easy to transfer to the state in which it becomes easy for the switching member 7 to engage with the gear member 5, and it is possible to complete more smoothly the modification of the automatic reduction ratio while driving the motor 1 rotatably.

Further, in each of the electric tools of the first, fifth to seventh examples, when the gear shift is in the incomplete state, the control unit 62 reverses once the slide direction of the switching member 7 by the gear shift actuator 6. Therefore, when the gear shift is in the incomplete state, the switching member 7 is released from the gear member 5 once, and the relative rotation position between both members 7 and 5 is modified. In this state, it is possible to attempt the engagement again.

In addition, in the electric tool of the second example, when the gear shift is in the incomplete state, the control unit 62 modifies the slide drive force of the switching member 7 by the gear shift actuator 6. Therefore, when the switching member 7 does not engage with the gear member 5 well, it is possible to transfer to the state in which it becomes easy for both members 7 and 5 to engage with each other by changing the drive force of the gear shift actuator 6, such as increasing the drive force.

In addition, in the electric tool of the third example, when the gear shift is in the incomplete state, the control unit 62 modifies the relative rotation speed between the switching member 7 and the gear member 5 whiling keeping the slide drive of the switching member 7 by the gear shift actuator 6. Therefore, it becomes easy for the switching member 7 to engage with the gear member 5, and when it is shifted to the state in which it becomes easy for the switching member 7 to engage with the gear member 5, it is possible to move slidably the switching member 7 in respond to the shift quickly and to complete the modification of the reduction ratio smoothly in short time.

In addition, in the electric tool of the embodiment, when the gear shift is in the incomplete state, the control unit 62 modifies the relative rotation speed between the switching member 7 and the gear member 5 in a state in which the slide drive of the switching member 7 by the gear shift actuator 6 stops. Therefore, when the switching member 7 does not engage with the gear member 5 well, the sliding movement of the switching member 7 is stopped once, and it becomes the state in which it is easy for the relative rotation speed between the switching member 7 and the gear member 5 to be modified, and the relative rotation speed is modified. In this state, it is possible to attempt the engagement again.

In addition, in each of the electric tools according to the third example and the embodiment of the invention, when increasing the rotational power of the motor 1 and modifying the relative rotation speed between both members 7 and 5, the control unit 62 modifies the rotational acceleration increasing the rotational power so that the rotational acceleration when it is determined that the switching member 7 has moved slidably is larger than that when it is determined that the switching member 7 has not moved slidably. Therefore, it becomes easy to reconstitute the rotational power of the motor 1 to the available state for the work, and it is possible to reduce the switching time required for the modification of the reduction ratio.

In the electric tools according to the first to fifth examples and the embodiment of the invention, the slide position detecting unit 61 detects the position of the switching member 7 and the member working with the switching member 7. Therefore, it is possible to detect the actual slide position of the switching member 7 more directly.

In addition, in the electric tools according to the sixth and seventh example, the slide position detecting unit 61 detects the driving state of the gear shift actuator 6, and detects the position of the switching member 7 on the basis of this detection result indirectly. Therefore, degree of freedom of select becomes high about the install place, variety, or the like of a sensor that including the slide position detecting unit 61.

Further, in the electric tool according to the sixth example, the gear shift actuator 6 is a rotation type actuator, and the slide position detecting unit 61 detects the rotational state of the gear shift actuator 6. Therefore, it is possible to compactly configure the slide position detecting unit 61 so as to contact or approach the gear shift actuator 6.

In addition, in the electric tool according to the seventh example, the gear shift actuator 6 is a direct acting type actuator, and the slide position detecting unit 61 detects the direct acting state of the gear shift actuator 6. Therefore, it is possible to compactly configure the slide position detecting unit 61 so as to contact or approach the gear shift actuator 6.

When the gear shift is in the incomplete state, the electric tool according to the present example modifies the relative rotation speed between the switching member 7 and the gear member 5 by further modifying the rotational power of the motor 1. However, the present invention is not limited to the electric tool that modifies the rotational power of the motor 1, thereby modifying the relative rotation speed. For example, a power means that switches the rotation speed of the switching member 7 may be established aside from the motor 1, the relative rotation speed between the switching member 7 and the gear member 5 may be decrease by controlling the power means. Of course the power means may be doubled with the gear shift actuator 6, such as decreasing the relative rotation speed, using the motor 50.

In addition, the state in which the rotational power of the motor stops when the gear shift is in the incomplete state includes the state of the operation to stop the drive of the motor and to initialize the reduction ratio for the next work, for example, the operation to returning from the third gear to the first gear, when the work with the electric tool is finished or the like. That is, when the reduction ratio is initialized in the state in which the motor 1 is stopped in accordance with the work is finished, and the gear shift is failed, the control unit 61 drives the motor 1, thereby increasing the rotational power. Therefore, it is possible to initialize the reduction ratio quickly, and to improve the work efficiency by the electric tool.

### REFERENCE SIGNS LIST

- 1: Motor
- 2: Reduction mechanical unit
- 5: Gear member
- 6: Gear shift actuator
- 7: Switching member
- 61: Slide position detecting unit
- 62: Control unit

## Claims

1. An electric tool comprising:
a motor (1) serving as a drive source;
a reduction mechanical unit (2) reducing and transferring a rotational power of the motor (1); and
a reduction ratio switching means switching a reduction ratio of the reduction mechanical unit (2),
wherein the reduction mechanical unit (2) is formed so as to switch the reduction ratio by using a switching member (7) moving slidably in an axial direction, and a gear member (5) switching an engagement state and a non-engagement state with the switching member (7) in accordance with a slide position in the axial direction of the switching member (7),
wherein the reduction ratio switching means comprises:
a gear shift actuator (6) sliding the switching member (7) in the axial direction;
a slide position detecting unit (61) detecting the slide position of the switching member (7); and
a control unit (62) starting the gear shift actuator (6) and temporarily modifying the rotational power of the motor (1) in accordance with a detection result of the slide position detecting unit (61),
**characterized in that**
the control unit (62) is configured to, when driving the gear shift actuator (6) and modifying the rotational power temporarily, increase the rotational power, increase the rotational power after decreasing the rotational power once, or repeat the decrease and the increase with a predetermined cycle, and modify a relative rotation speed between the switching member (7) and the gear member (5) in an incomplete state when the control unit (62) determines by the detection result of the slide position detecting unit (61) that the switching member (7) has not moved slidably to a predetermined target position yet and the gear shift is failed.

2. The electric tool according to claim 1, wherein the control unit (62) is further configured to modify drive control of the gear shift actuator (6) in accordance with the detection result of the slide position detecting unit (61).

3. The electric tool according to claim 2, wherein the control unit (62) is further configured to reverse once a slide direction of the switching member (7) by the gear shift actuator (6) when the gear shift is in the incomplete state.

4. The electric tool according to claim 2, wherein the control unit (62) is further configured to modify a slide driving force of the switching member (7) by the gear shift actuator (6) when the gear shift is in the incomplete state.

5. The electric tool according to claim 2, wherein the control unit (62) is further configured to modify the relative rotation speed while maintaining a slide driving of the switching member (7) by the gear shift actuator (6) when the gear shift is in the incomplete state.

6. The electric tool according to claim 2, wherein the control unit (62) is further configured to modify the relative rotation speed while stopping a slide driving of the switching member (7) by the gear shift actuator (6) when the gear shift is in the incomplete state.

7. The electric tool according to claim 6, wherein the control unit (62) is further configured to increase the rotational power and modify the relative rotation speed when the gear shift is in the incomplete state and it is determined that the rotational power of the motor (1) decreases or stops.

8. The electric tool according to claim 7, wherein the control unit (62) is further configured to increase a rotational acceleration increasing the rotational power so that the rotational acceleration in case where the switching member (7) has moved slidably is larger than the rotational acceleration in case where the switching member (7) has not moved slidably.

## Patentansprüche

1. Elektrowerkzeug, aufweisend:
einen Motor (1), der als Antriebsquelle dient;
eine mechanische Untersetzungseinheit (2), die eine Drehleistung des Motors (1) untersetzt und überträgt; und
ein Untersetzungsschaltmittel, das ein Untersetzungsverhältnis der mechanischen Untersetzungseinheit (2) schaltet,
wobei die mechanische Untersetzungseinheit (2) so gebildet ist, dass sie das Untersetzungsverhältnis unter Verwendung eines Schaltelements (7), das sich verschiebbar in einer axialen Richtung bewegt, und eines Getriebeelements (5) schaltet, das einen Eingriffszustand und einen Nichteingriffszustand mit dem Schaltelement (7) in Übereinstimmung mit einer Schiebeposition in der axialen Richtung des Schaltelements (7) schaltet,
wobei das Untersetzungsschaltmittel aufweist:
ein Getriebeschaltstellglied (6), das das Schaltelement (7) in der axialen Richtung verschiebt;
eine Schiebepositionserfassungseinheit (61), die die Schiebeposition des Schaltelements (7) erfasst; und
eine Steuereinheit (62), die das Getriebeschaltstellglied (6) startet und die Drehleistung des Motors (1) in Übereinstimmung mit einem Erfassungsergebnis der Schiebepositionserfassungseinheit (61) vorübergehend modifiziert,
**dadurch gekennzeichnet, dass**
die Steuereinheit (62) so konfiguriert ist, dass sie, wenn sie das Getriebeschaltstellglied (6) antreibt und die Drehleistung vorübergehend modifiziert, die Drehleistung erhöht, nachdem sie die Drehleistung einmal verringert hat, oder die Verringerung und die Erhöhung mit einem vorbestimmten Zyklus wiederholt, und in einem unvollständigen Zustand, wenn die Steuereinheit (62) durch das Erfassungsergebnis der Schiebepositionserfassungseinheit (61) bestimmt, dass sich das Schaltelement (7) noch nicht verschiebbar zu einer vorbestimmten Zielposition bewegt hat und der Schaltvorgang fehlgeschlagen ist, eine relative Drehgeschwindigkeit zwischen dem Schaltelement (7) und dem Getriebeelement (5) modifiziert.

2. Elektrowerkzeug nach Anspruch 1, wobei die Steuereinheit (62) ferner konfiguriert ist, um eine Antriebssteuerung des Getriebeschaltstellglieds (6) in Übereinstimmung mit dem Erfassungsergebnis der Schiebepositionserfassungseinheit (61) zu modifizieren.

3. Elektrowerkzeug nach Anspruch 2, wobei die Steuereinheit (62) ferner konfiguriert ist, um eine Schieberichtung des Schaltelements (7) durch das Getriebeschaltstellglied (6) einmal umzukehren, wenn sich der Schaltvorgang in dem unvollständigen Zustand befindet.

4. Elektrowerkzeug nach Anspruch 2, wobei die Steuereinheit (62) ferner konfiguriert ist, um eine Schiebeantriebskraft des Schaltelements (7) durch das Getriebeschaltstellglied (6) zu modifizieren, wenn sich der Schaltvorgang in dem unvollständigen Zustand befindet.

5. Elektrowerkzeug nach Anspruch 2, wobei die Steuereinheit (62) ferner konfiguriert ist, um die relative Drehgeschwindigkeit zu modifizieren, während ein Schiebeantrieb des Schaltelements (7) durch das Getriebeschaltstellglied (6) aufrecht erhalten wird, wenn sich der Schaltvorgang in dem unvollständigen Zustand befindet.

6. Elektrowerkzeug nach Anspruch 2, wobei die Steuereinheit (62) ferner konfiguriert ist, um die relative Drehgeschwindigkeit zu modifizieren, während ein Schiebeantrieb des Schaltelements (7) durch das Getriebeschaltstellglied (6) angehalten wird, wenn sich der Schaltvorgang in dem unvollständigen Zustand befindet.

7. Elektrowerkzeug nach Anspruch 6, wobei die Steuereinheit (62) ferner konfiguriert ist, um die Drehleistung zu erhöhen und die relative Drehgeschwindigkeit zu modifizieren, wenn sich der Schaltvorgang in dem unvollständigen Zustand befindet und festgestellt wird, dass die Drehleistung des Motors (1) abnimmt oder aussetzt.

8. Elektrowerkzeug nach Anspruch 7, wobei die Steuereinheit (62) ferner konfiguriert ist, um eine Drehbeschleunigung, die die Drehleistung erhöht, zu erhöhen, so dass die Drehbeschleunigung in dem Fall, in dem sich das Schaltelement (7) verschiebbar bewegt hat, größer ist als die Drehbeschleunigung in dem Fall, in dem sich das Schaltelement (7) nicht verschiebbar bewegt hat.

## Revendications

1. Outil électrique comprenant :
un moteur (1) qui sert de source d'entraînement ;
une unité mécanique de réduction (2) qui réduit et transfère une puissance de rotation du moteur (1) ; et
un moyen de déclenchement de rapport de réduction qui déclenche un rapport de réduction de l'unité mécanique de réduction (2),
dans lequel l'unité mécanique de réduction (2) est formée de façon à déclencher le rapport de réduction à l'aide d'un élément de déclenchement (7) qui se déplace de manière coulissante dans une direction axiale, et d'un élément d'engrenage (5) qui déclenche un état d'engagement et un état de non-engagement avec l'élément de déclenchement (7) selon une position de coulissement dans la direction axiale de l'élément de déclenchement (7),
dans lequel le moyen de déclenchement de rapport de réduction comprend :
un actionneur de changement de vitesse (6) qui fait coulisser l'élément de déclenchement (7) dans la direction axiale ;
une unité de détection de position de coulissement (61) qui détecte la position de coulissement de l'élément de déclenchement (7) ; et
une unité de commande (62) qui déclenche l'actionneur de changement de vitesse (6) et qui modifie temporairement la puissance de rotation du moteur (1) selon un résultat de détection de l'unité de détection de position de coulissement (61),
**caractérisé en ce que**
l'unité de commande (62) est configurée pour, lors de l'entraînement de l'actionneur de changement de vitesse (6) et de la modification de la puissance de rotation de manière temporaire, augmenter la puissance de rotation, augmenter la puissance de rotation après avoir réduit la puissance de rotation une fois, ou répéter la diminution et l'augmentation selon un cycle prédéterminé, et modifier une vitesse de rotation relative entre l'élément de déclenchement (7) et l'élément d'engrenage (5) dans un état incomplet lorsque l'unité de commande (62) détermine par le résultat de détection de l'unité de détection de position de coulissement (61) que l'élément de déclenchement (7) ne s'est pas déplace par coulissement vers un emplacement cible prédéterminé et que le changement de vitesse a échoué.

2. Outil électrique selon la revendication 1, dans lequel l'unité de commande (62) est en outre configurée pour modifier la commande d'entraînement de l'actionneur de changement de vitesse (6) selon le résultat de détection de l'unité de détection de position de coulissement (61).

3. Outil électrique selon la revendication 2, dans lequel l'unité de commande (62) est en outre configurée pour inverser une fois une direction de coulissement de l'élément de déclenchement (7) par l'actionneur de changement de vitesse (6) lorsque le changement de vitesse se trouve à l'état incomplet.

4. Outil électrique selon la revendication 2, dans lequel l'unité de commande (62) est en outre configurée pour modifier une force d'entraînement de coulissement de l'élément de déclenchement (7) par l'actionneur de changement de vitesse (6) lorsque le changement de vitesse est à l'état incomplet.

5. Outil électrique selon la revendication 2, dans lequel l'unité de commande (62) est en outre configurée pour modifier la vitesse de rotation relative tout en maintenant un entraînement de coulissement de l'élément de déclenchement (7) par l'actionneur de changement de vitesse (6) lorsque le changement de vitesse est à l'état incomplet.

6. Outil électrique selon la revendication 2, dans lequel l'unité de commande (62) est en outre configurée pour modifier la vitesse de rotation relative tout en arrêtant un entraînement de coulissement de l'élément de déclenchement (7) par l'actionneur de changement de vitesse (6) lorsque le changement de vitesse est à l'état incomplet.

7. Outil électrique selon la revendication 6, dans lequel l'unité de commande (62) est en outre configurée pour augmenter la puissance de rotation et pour modifier la vitesse de rotation relative lorsque le changement de vitesse est à l'état incomplet et lorsqu'il est déterminé que la puissance de rotation du moteur (1) diminue ou s'arrête.

8. Outil électrique selon la revendication 7, dans lequel l'unité de commande (62) est en outre configurée pour augmenter une accélération de rotation en augmentant la puissance de rotation de sorte que l'accélération de rotation, lorsque l'élément de déclenchement (7) s'est déplacé par coulissement, soit plus importante que l'accélération de rotation qui existe lorsque l'élément de déclenchement (7) ne s'est pas déplacé par coulissement.
